# EUROPEAN PATENT APPLICATION

(11) **EP 4 478 264 A1**
(43) Date of publication of application: **18.12.2024**
(21) Application number: 22925918.9
(22) Date of filing: 10.02.2022
(51) Int. Cl.: G06N 20/00

(54) **INFORMATION PROCESSING PROGRAM, INFORMATION PROCESSING DEVICE, AND INFORMATION PROCESSING METHOD**

(71) Applicant: FUJITSU LIMITED, Kawasaki-shi, Kanagawa 211-8588 (JP)
(72) Inventor: FUJISHIGE Yuta, Kawasaki-shi, Kanagawa 211-8588 (JP); ASAI Tatsuya, Kawasaki-shi, Kanagawa 211-8588 (JP); UEMURA Kento, Kawasaki-shi, Kanagawa 211-8588 (JP); SUZUKI Hirofumi, Kawasaki-shi, Kanagawa 211-8588 (JP); KOYANAGI Yusuke, Kawasaki-shi, Kanagawa 211-8588 (JP); MARUHASHI Koji, Kawasaki-shi, Kanagawa 211-8588 (JP)
(74) Representative: Hoffmann Eitle
(86) International application number: PCT/JP2022/005439
(87) International publication number: WO 2023/152897

(57) **Abstract**

A storage unit that stores a plurality of pieces of data constituted by combinations of a plurality of features is referred to and, for each of a plurality of conditions, data groups of which the combinations satisfy each of the conditions are extracted; relationships between the plurality of features included in the data groups that correspond to each of the conditions are identified for each of the plurality of conditions; the relationships for each of the plurality of conditions are classified into a plurality of first clusters; the data groups for each of the plurality of conditions are classified into a plurality of second clusters; the data groups for each of the plurality of conditions are classified into a plurality of third clusters such that a plurality of the data groups that are in a same one of the first clusters obtained by classifying the relationships that correspond to each of the data groups and are in a same one of the second clusters obtained by classifying each of the data groups are classified into a same cluster; and first conditions capable of classifying the data groups classified into each cluster and the data groups classified into other clusters are identified for each of the plurality of third clusters.

## Description

### TECHNICAL FIELD

The present invention relates to an information processing program, an information processing apparatus, and an information processing method.

### BACKGROUND ART

In recent years, in multiple fields including marketing and medical care, for example, measures for solving various problems are prepared by artificial intelligence (AI). Specifically, such measures are prepared, for example, by considering not only the correlation between the cause and the result but also causal relationships expressing relationships between causes and results. Therefore, in recent years, for example, a technique for estimating a causal relationship with respect to the entire data has been studied (see, for example, Non-Patent Document 1).

### CITATION LIST

### NON-PATENT DOCUMENT

Non-Patent Document 1: Koyanagi, Yusuke; Uemura, Kento; Asai, Tatsuya; Kaneko, Junji; Ohori, Kotaro, "Developing a Framework for Individual Causal Discovery and its Application to Real Marketing Data" [online] The Japanese Society for Artificial Intelligence (JSAI) Special Interest Group on Business Informatics (SIG-BI #18), [Searched on December 16, 2021], Internet (URL: http://sig-bi.jp/doc/18th_SIG-BI_2021/18th_SIG-BI_2021_paper_13.pdf)

### SUMMARY OF INVENTION

### TECHNICAL PROBLEM

Here, for example, in a case of a promotion in marketing, each customer who has purchased a product individually has a characteristic leading to purchase of the product. Therefore, in order to prepare appropriate measures for each customer, for example, it is desired to identify not only the causal relationship common to all customers but also the causal relationships for each customer falling under a plurality of conditions.

Accordingly, in a case where measures to solve various problems are prepared, for example, an approach is used in which a condition of data is found based on enumeration of emerging patterns, and causal relationships are additionally identified for each piece of data falling under each condition, apart from the causal relationship with respect to the entire data.

However, for example, in a case where a large number of causal relationships corresponding to each condition are identified, there is a case where it is difficult to identify a causal relationship leading to solving a problem (hereinafter, also referred to as an important causal relationship).

Thus, in one aspect, an object of the present invention is to provide an information processing program, an information processing apparatus, and an information processing method capable of identifying an important causal relationship leading to solving a problem.

### SOLUTION TO PROBLEM

In one form of the embodiments, a computer is caused to execute a process including: referring to a storage unit that stores a plurality of pieces of data constituted by combinations of a plurality of features to extract, for each of a plurality of conditions, data groups of which the combinations satisfy each of the conditions; identifying, for each of the plurality of conditions, relationships between the plurality of features included in the data groups that correspond to each of the conditions; classifying the relationships for each of the plurality of conditions into a plurality of first clusters, based on first similarity between the relationships for each of the plurality of conditions; classifying the data groups for each of the plurality of conditions into a plurality of second clusters, based on second similarity between the data groups for each of the plurality of conditions; classifying the data groups for each of the plurality of conditions into a plurality of third clusters so as to classify, into a same cluster, a plurality of the data groups that are in a same one of the first clusters obtained by classifying the relationships that correspond to each of the data groups and are in a same one of the second clusters obtained by classifying each of the data groups; identifying, for each of the plurality of third clusters, first conditions capable of classifying the data groups classified into each cluster and the data groups classified into other clusters; and outputting the identified first conditions together with a classification result for the plurality of third clusters.

### ADVANTAGEOUS EFFECTS OF INVENTION

According to one aspect, an important causal relationship leading to solving a problem may be identified.

### BRIEF DESCRIPTION OF DRAWINGS

FIG. 1 is a diagram illustrating a configuration of an information processing system 10.
FIG. 2 is a flowchart diagram explaining a cause identification process according to a comparative example.
FIG. 3 is a diagram explaining a specific example of S2.
FIG. 4 is a diagram explaining a specific example of S2.
FIG. 5 is a diagram explaining a specific example of a causal graph 132.
FIG. 6 is a diagram explaining a hardware configuration of an information processing apparatus 1.
FIG. 7 is a block diagram of functions of the information processing apparatus 1.
FIG. 8 is a flowchart diagram explaining an outline of a cause identification process according to a first embodiment.
FIG. 9 is a flowchart diagram explaining details of the cause identification process according to the first embodiment.
FIG. 10 is a flowchart diagram explaining details of the cause identification process according to the first embodiment.
FIG. 11 is a flowchart diagram explaining details of the cause identification process according to the first embodiment.
FIG. 12 is a diagram explaining details of the cause identification process according to the first embodiment.
FIG. 13 is a diagram explaining details of the cause identification process according to the first embodiment.
FIG. 14 is a diagram explaining details of the cause identification process according to the first embodiment.
FIG. 15 is a diagram explaining details of the cause identification process according to the first embodiment.
FIG. 16 is a diagram explaining details of the cause identification process according to the first embodiment.
FIG. 17 is a diagram explaining details of the cause identification process according to the first embodiment.
FIG. 18 is a diagram explaining details of the cause identification process according to the first embodiment.
FIG. 19 is a diagram explaining a specific example of the process in S43.

### DESCRIPTION OF EMBODIMENTS

### [Configuration of Information Processing System]

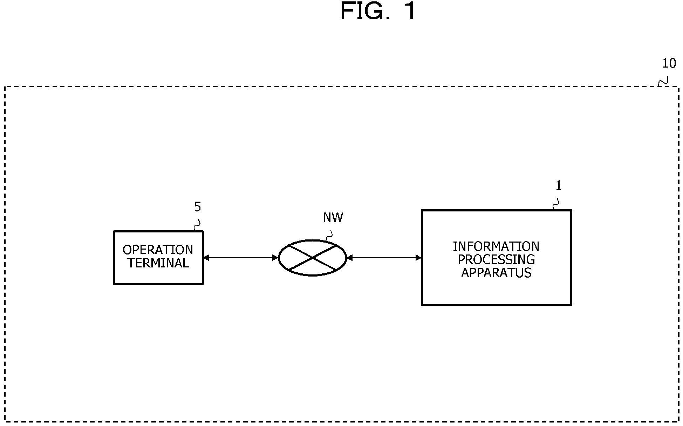

First, a configuration of an information processing system 10 will be described. FIG. 1 is a diagram explaining a configuration of the information processing system 10.

As illustrated in FIG. 1, the information processing system 10 includes, for example, an information processing apparatus 1 and an operation terminal 5.

The information processing apparatus 1 is, for example, a physical machine or a virtual machine and performs a process (hereinafter, a cause identification process) of identifying a causal relationship that is a cause of an objective variable from a data group 131 that is an object to be processed (hereinafter, also referred to as an object data group 131). The object data group 131 is, for example, a data group made up of a plurality of pieces of data constituted by combinations of a plurality of features.

The operation terminal 5 includes, for example, one or more personal computers (PCs) and is a terminal for an operator to, for example, input desired information. Specifically, the operation terminal 5 transmits, for example, the object data group 131 input by the operator to the information processing apparatus 1. Hereinafter, a cause identification process according to a comparative example will be described.

### [Cause Identification Process according to Comparative Example]

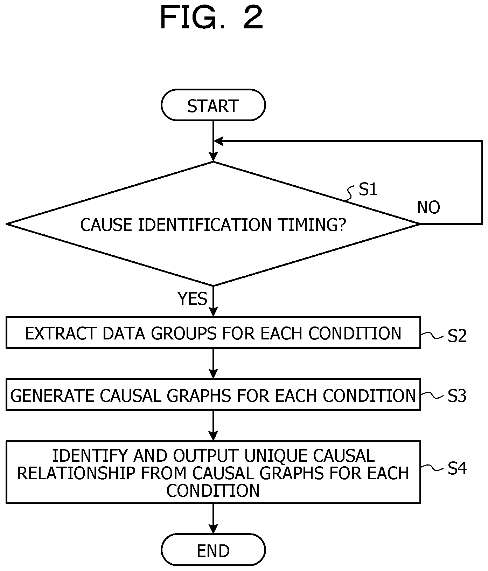

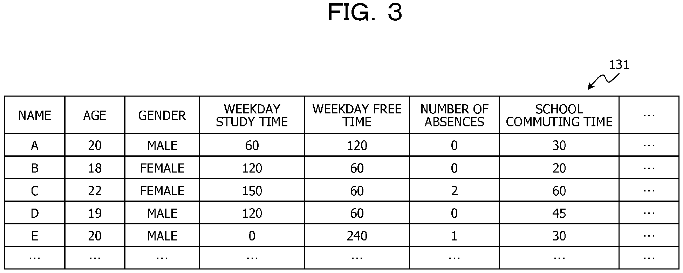

FIG. 2 is a flowchart diagram explaining a cause identification process according to a comparative example. FIGs. 3 to 5 are diagrams explaining the cause identification process according to the comparative example.

For example, the information processing apparatus 1 waits until a cause identification timing comes (NO in S1). The cause identification timing is, for example, a timing when the operator inputs, to the information processing apparatus 1, that the cause identification process is to be started.

Then, in a case where the cause identification timing has come (YES in S1), the information processing apparatus 1 refers to, for example, a storage unit that stores the object data group 131 to extract, for each of a plurality of conditions designated in advance by the operator (hereinafter, also simply referred to as a plurality of conditions), data groups 131 (hereinafter, also referred to as partial data groups 131) whose combinations of a plurality of features satisfy each condition (S2). The plurality of conditions includes, for example, conditions regarding a combination of features specified based on enumeration of emerging patterns. Hereinafter, a specific example of the process in S2 will be described.

### [Specific Example of Process in S2]

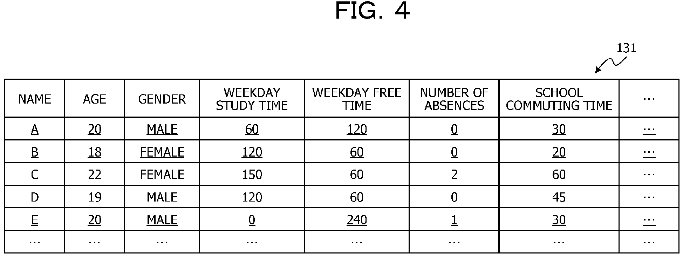

FIGs. 3 and 4 are diagrams explaining a specific example of S2. Specifically, FIGs. 3 and 4 are diagrams explaining a specific example of the object data group 131. Note that, in the following description, it is assumed that the object data group 131 is a data group relating to a plurality of students and the objective variable is the grade of each student. In addition, hereinafter, description will be given on the assumption that the object data group 131 includes "name", "age", "gender", "weekday study time", "weekday free time", "number of absences", "school commuting time", and the like as features.

In the object data group 131 illustrated in FIG. 3, for example, the data in the first row has "A" set as "name", "20" set as "age", "male" set as "gender", "60 (minutes)" set as "weekday study time", "120 (minutes)" set as "weekday free time", "0 (days)" set as "number of absences", and "30 (minutes)" set as "school commuting time".

In addition, in the object data group 131 illustrated in FIG. 3, for example, the data in the second row has "B" set as "name", "18" set as "age", "female" set as "gender", "120 (minutes)" set as "weekday study time", "60 (minutes)" set as "weekday free time", "0 (days)" set as "number of absences", and "20 (minutes)" set as "school commuting time". Description of other information included in FIG. 3 will be omitted.

Then, for example, in a case where one condition (hereinafter, also referred to as a certain condition) included in a plurality of predefined conditions is "weekday free time > 60 Λ school commuting time < 30", the information processing apparatus 1 identifies a partial data group 131 including data in the first row, the second row, and the fifth row, as the partial data group 131 corresponding to the certain condition, as indicated by the underlined portions in FIG. 4.

Returning to FIG. 2, for example, the information processing apparatus 1 generates, for each of the plurality of conditions, causal graphs 132 indicating relationships between a plurality of features included in the partial data groups 131 corresponding to each condition (S3). Hereinafter, a specific example of the causal graph will be described.

### [Specific Example of Causal Graph]

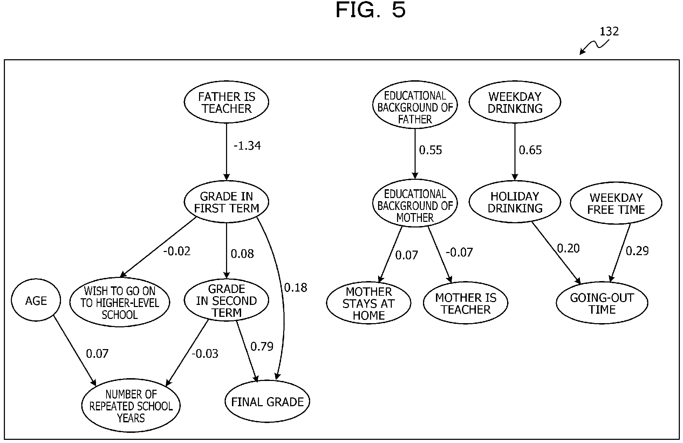

FIG. 5 is a diagram explaining a specific example of the causal graph 132. Specifically, FIG. 5 is a diagram explaining a specific example of the causal graph 132 illustrating a relationship between a plurality of features included in the partial data group 131 (the partial data group 131 corresponding to the certain condition) described with reference to FIG. 4. Note that each of nodes in the causal graph 132 illustrated in FIG. 5 corresponds to one of the respective features described with reference to FIG. 4. In addition, the arrows and numerical values between each node indicate the presence or absence of the causal relationship and the strength of the causal relationship between the plurality of features described with reference to FIG. 4.

Specifically, for example, in the causal graph 132 illustrated in FIG. 5, the arrow toward the node corresponding to "grade in first term" from the node corresponding to "father is a teacher" indicates that the grade in the first term decreases by 1.34 (points) in a case where the father of a student is a teacher. In addition, the arrow toward the node corresponding to the "grade in second term" from the node corresponding to the "grade in first term" indicates that the grade in the second term increases by 0.88 (points) in a case where the grade in the first term increases by 1 (point). Description of other information included in FIG. 5 will be omitted.

Returning to FIG. 2, for example, the information processing apparatus 1 identifies a causal relationship that is a cause of the objective variable from the causal graphs 132 generated for each of the plurality of conditions (S4).

Specifically, for example, for each of the plurality of causal graphs 132 generated in the process in S3, the information processing apparatus 1 identifies a causal relationship (that is, a unique causal relationship) not included in the other causal graphs 132 among the causal relationships included in each causal graph 132. Then, for example, the information processing apparatus 1 identifies the identified causal relationship as a condition under which a causal relationship that is a cause of the objective variable appears.

This allows the information processing apparatus 1 to identify, for example, a unique causal relationship that does not appear in the causal graph 132 corresponding to the entire object data group 131.

However, for example, in a case where a large number of causal graphs 132 are generated in the process in S3, the information processing apparatus 1 may not be allowed to easily identify an important causal relationship (an important causal relationship leading to objective solution) from the generated large number of causal graphs 132.

Thus, the information processing apparatus 1 according to the present embodiment refers to, for example, a storage unit that stores the object data group 131 constituted by combinations of a plurality of features to extract, for each of the plurality of conditions, partial data groups 131 whose combinations of the plurality of features satisfy each condition. Then, for example, for each of the plurality of conditions, the information processing apparatus 1 generates the causal graphs 132 indicating relationships between the plurality of features included in the partial data groups 131 corresponding to each condition.

Subsequently, the information processing apparatus 1 classifies the causal graphs 132 for each of the plurality of conditions into a plurality of clusters (hereinafter, also referred to as a plurality of first clusters), for example, based on similarity (hereinafter, also referred to as first similarity) between the causal graphs 132 for each of the plurality of conditions. In addition, the information processing apparatus 1 classifies the partial data groups 131 for each of the plurality of conditions into a plurality of clusters (hereinafter, a plurality of second clusters), for example, based on similarity (hereinafter, also referred to as second similarity) between the partial data groups 131 for each of the plurality of conditions.

Thereafter, for example, the information processing apparatus 1 classifies the partial data groups 131 for each of the plurality of conditions into a plurality of clusters (hereinafter, also referred to as a plurality of third clusters) so as to classify, into the same cluster, a plurality of partial data groups 131 being in the same one of the first clusters obtained by classifying the causal graphs 132 corresponding to each of the partial data groups 131 and being in the same one of the second clusters obtained by classifying each of the partial data groups 131.

Then, the information processing apparatus 1 identifies, for each of the plurality of third clusters, conditions (hereinafter, also referred to as first conditions) capable of classifying the partial data groups 131 classified into each cluster and the partial data groups 131 classified into the other clusters and outputs the identified first conditions together with a classification result for the plurality of third clusters (hereinafter, also simply referred to as a classification result).

Specifically, for example, for each of the plurality of third clusters, the information processing apparatus 1 outputs, as a classification result, information indicating a causal relationship not included in the causal graph 132 corresponding to the entire object data group 131 among the causal relationships included in the plurality of causal graphs 132 classified into each cluster.

That is, for example, the information processing apparatus 1 according to the present embodiment classifies the partial data groups 131 extracted for each of the plurality of conditions into a plurality of third clusters such that, among the partial data groups 131 that can be determined to be essentially close to each other, the partial data groups 131 whose corresponding causal graphs 132 can also be determined to be essentially close to each other are included in the same cluster. Then, for example, the information processing apparatus 1 identifies the first condition that is a condition under which an important causal relationship leading to objective solution appears, for each of the plurality of third clusters.

This may allow the information processing apparatus 1 according to the present embodiment to aggregate combinations that can be determined to be essentially close to each other, even in a case where there are a large number of combinations of the partial data groups 131 and the causal graphs 132, for example, and to easily identify an important causal relationship leading to solving a problem.

In addition, for example, the information processing apparatus 1 according to the present embodiment outputs classification results and the first conditions corresponding to each cluster together, thereby enabling output in a form associating an important causal relationship identified by the cause identification process with the first condition under which the identified important causal relationship appears. Therefore, for example, by browsing each piece of information output by the information processing apparatus 1, the operator may be allowed to easily grasp the correspondence between the important causal relationship identified by the cause identification process and the first condition under which the identified important causal relationship appears.

### [Hardware Configuration of Information Processing System]

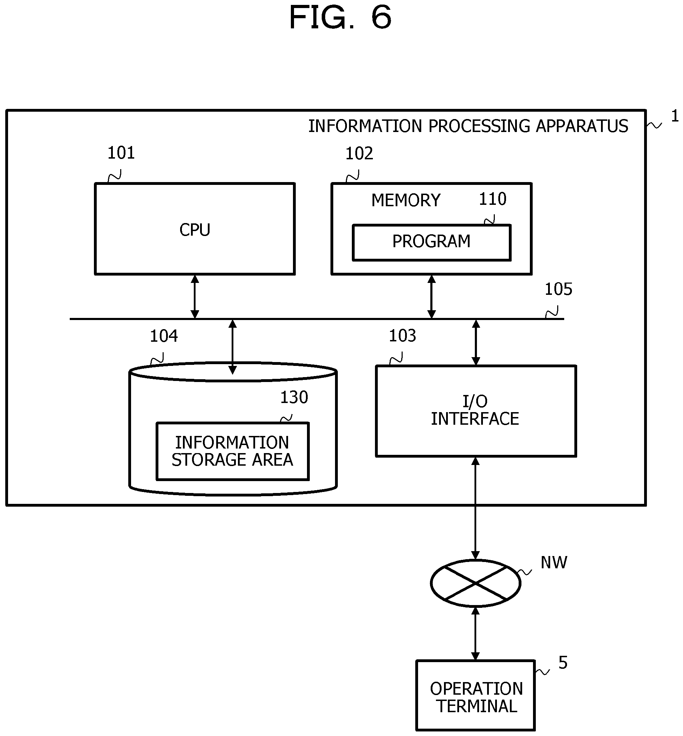

Next, a hardware configuration of the information processing system 10 will be described. FIG. 6 is a diagram explaining a hardware configuration of the information processing apparatus 1.

As illustrated in FIG. 6, the information processing apparatus 1 includes a central processing unit (CPU) 101 that is a processor, a memory 102, an input/output (I/O) interface 103, and a storage medium 104. The respective units are inter-coupled via a bus 105.

The storage medium 104 has, for example, a program storage area (not illustrated) that stores a program 110 for performing the cause identification process (hereinafter, also referred to as an information processing program 110). In addition, the storage medium 104 has an information storage area 130 that stores information used in performing the cause identification process, for example. Note that the storage medium 104 may be, for example, a hard disk drive (HDD) or a solid state drive (SSD).

The CPU 101 executes the program 110 loaded into the memory 102 from the storage medium 104 to perform the cause identification process.

The I/O interface 103 is, for example, an interface device such as a network interface card and can access the operation terminal 5.

### [Functions of Information Processing System]

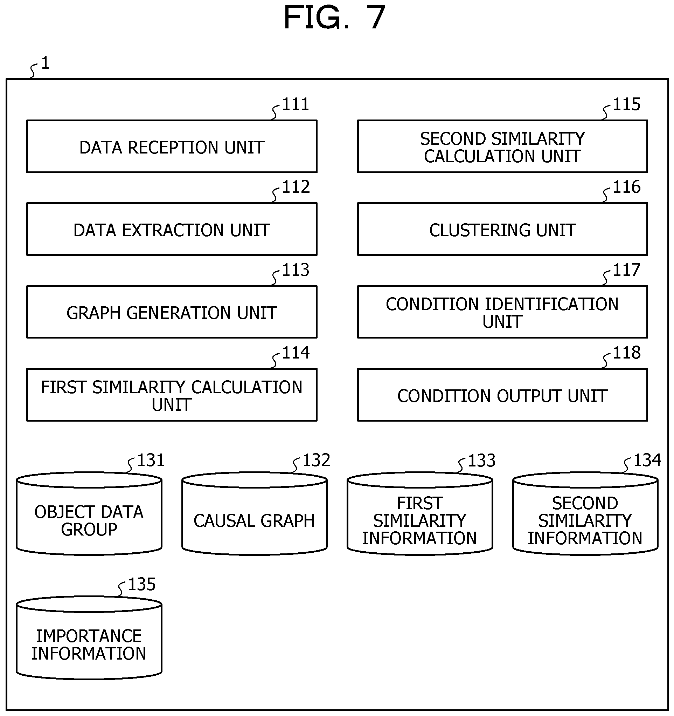

Next, functions of the information processing system 10 will be described. FIG. 7 is a block diagram of functions of the information processing apparatus 1.

As illustrated in FIG. 7, for example, hardware such as the CPU 101 and the memory 102 and the program 110 cooperate organically, whereby the information processing apparatus 1 implements various functions including a data reception unit 111, a data extraction unit 112, a graph generation unit 113 (hereinafter, also referred to as a relationship identification unit 113), a first similarity calculation unit 114, a second similarity calculation unit 115, a clustering unit 116, a condition identification unit 117, and a condition output unit 118.

In addition, the information processing apparatus 1 stores, for example, the object data group 131, the causal graph 132, first similarity information 133, second similarity information 134, and importance information 135 in the information storage area 130.

The data reception unit 111 receives, for example, the object data group 131 input by the operator via the operation terminal 5. Then, for example, the data reception unit 111 stores the received object data group 131 in the information storage area 130.

The data extraction unit 112 refers to, for example, the object data group 131 stored in the information storage area 130 to extract, for each of a plurality of conditions designated in advance by the operator, partial data groups 131 whose combinations of a plurality of features satisfy each condition.

For example, the graph generation unit 113 generates, for each of the plurality of conditions, the causal graphs 132 indicating relationships between a plurality of features included in the partial data groups 131 corresponding to each condition.

For example, the first similarity calculation unit 114 calculates the first similarity information 133 between the causal graphs 132 for each of the plurality of conditions. Then, for example, the first similarity calculation unit 114 stores the calculated first similarity information 133 in the information storage area 130.

For example, the second similarity calculation unit 115 calculates the second similarity information 134 between the partial data groups 131 for each of the plurality of conditions. Then, the second similarity calculation unit 115 stores, for example, the calculated second similarity information 134 in the information storage area 130.

The clustering unit 116 classifies the causal graphs 132 for each of the plurality of conditions into a plurality of first clusters, for example, based on the first similarity calculated by the first similarity calculation unit 114.

In addition, the clustering unit 116 classifies the partial data groups 131 for each of the plurality of conditions into a plurality of second clusters, for example, based on the second similarity calculated by the second similarity calculation unit 115.

Furthermore, for example, the clustering unit 116 classifies the partial data groups 131 for each of the plurality of conditions into a plurality of third clusters so as to classify, into the same cluster, a plurality of partial data groups 131 being in the same one of the first clusters obtained by classifying the causal graphs 132 corresponding to each of the partial data groups 131 and being in the same one of the second clusters obtained by classifying each of the partial data groups 131.

The condition identification unit 117 identifies, for each of the plurality of third clusters, the first conditions capable of classifying the partial data groups 131 classified into each cluster and the partial data groups 131 classified into the other clusters, for example.

The condition output unit 118 outputs, for example, the first conditions identified by the condition identification unit 117 to the operation terminal 5 together with a classification result for the plurality of third clusters by the clustering unit 116.

### [Outline of First Embodiment]

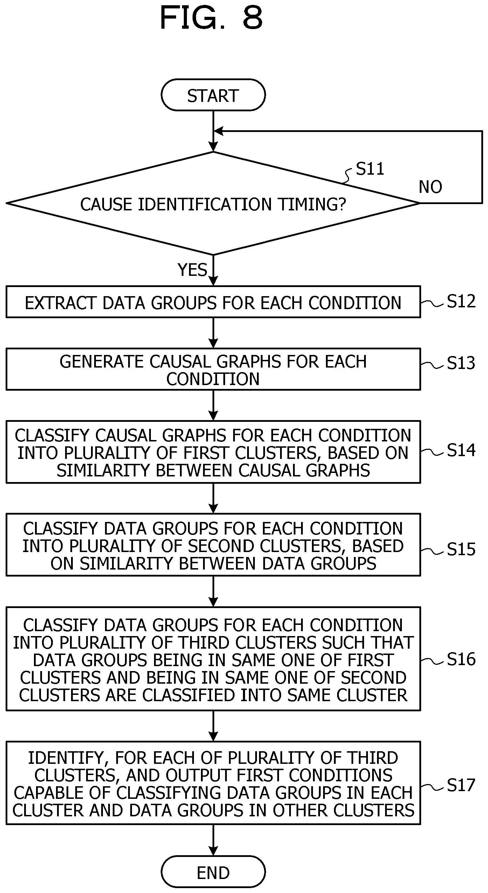

Next, an outline of a first embodiment will be described. FIG. 8 is a flowchart diagram explaining an outline of the cause identification process according to the first embodiment.

For example, the information processing apparatus 1 waits until a cause identification timing comes (NO in S11).

Then, in a case where the cause identification timing has come (YES in S11), the information processing apparatus 1 refers to, for example, the object data group 131 stored in the information storage area 130 to extract, for each of a plurality of conditions, partial data groups 131 whose combinations of a plurality of features satisfy each condition (S12).

Subsequently, for example, the information processing apparatus 1 generates, for each of the plurality of conditions, the causal graphs 132 indicating relationships between a plurality of features included in the partial data groups 131 corresponding to each condition (S13).

Next, the information processing apparatus 1 classifies the causal graphs 132 for each of the plurality of conditions into a plurality of first clusters, for example, based on the first similarity between the causal graphs 132 for each of the plurality of conditions (S14) .

In addition, the information processing apparatus 1 classifies the partial data groups 131 for each of the plurality of conditions into a plurality of second clusters, for example, based on the second similarity between the partial data groups 131 for each of the plurality of conditions (S15).

Furthermore, for example, the information processing apparatus 1 classifies the partial data groups 131 for each of the plurality of conditions into a plurality of third clusters so as to classify, into the same cluster, a plurality of partial data groups 131 being in the same one of the first clusters obtained by classifying the causal graphs 132 corresponding to each of the partial data groups 131 and being in the same one of the second clusters obtained by classifying each of the partial data groups 131 (S16).

Thereafter, for example, the information processing apparatus 1 identifies, for each of the plurality of third clusters, and outputs the first conditions capable of classifying the partial data groups 131 classified into each cluster and the partial data groups 131 classified into the other clusters (S17).

This may allow the information processing apparatus 1 according to the present embodiment to aggregate combinations that can be determined to be essentially close to each other, even in a case where there are a large number of combinations of the partial data groups 131 and the causal graphs 132, for example, and to easily identify an important causal relationship leading to solving a problem.

In addition, for example, the information processing apparatus 1 according to the present embodiment outputs classification results and the first conditions corresponding to each cluster together, thereby enabling output in a form associating an important causal relationship identified by the cause identification process with the first condition under which the identified important causal relationship appears. Therefore, for example, by browsing each piece of information output by the information processing apparatus 1, the operator may be allowed to easily grasp the correspondence between the important causal relationship identified by the cause identification process and the first condition under which the identified important causal relationship appears.

Furthermore, for example, the information processing apparatus 1 according to the present embodiment classifies, into the same cluster, a plurality of data groups 131 corresponding to the causal graphs 132 that can be determined to be similar to each other, among the plurality of data groups 131 that can be determined to be similar to each other, thereby enabling to output information indicating whether or not the plurality of causal graphs 132 similar to each other are essentially close to each other, and information indicating whether or not the data groups 131 similar to each other are essentially close to each other. Therefore, for example, by browsing each piece of information output by the information processing apparatus 1, the operator may be allowed to easily determine whether or not the plurality of causal graphs 132 similar to each other are essentially close to each other and determine whether or not the data groups 131 similar to each other are essentially close to each other.

### [Details of First Embodiment]

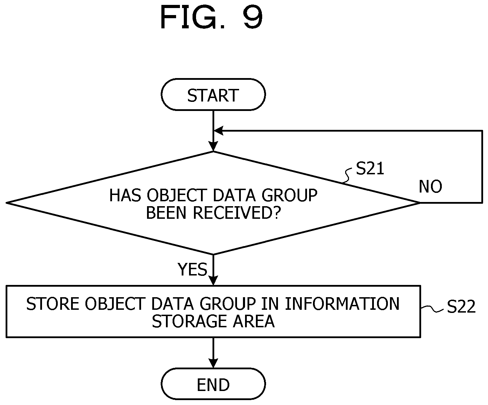

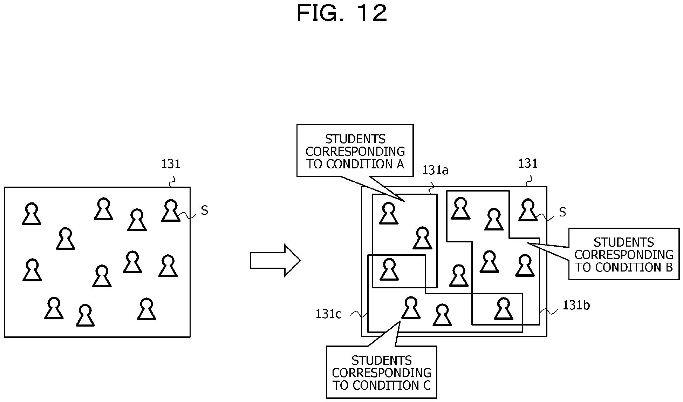

Next, details of the first embodiment will be described. FIGs. 9 to 11 are flowchart diagrams explaining details of the cause identification process according to the first embodiment. In addition, FIGs. 12 to 19 are diagrams explaining details of the cause identification process according to the first embodiment.

As illustrated in FIG. 9, the data reception unit 111 waits until receiving the object data group 131 transmitted from the operation terminal 5, for example (NO in S21).

Then, in a case where the object data group 131 has been received (YES in S21), the data reception unit 111 stores the received object data group 131 in the information storage area 130 (S22). Specifically, for example, the data reception unit 111 stores the object data group 131 described with reference to FIG. 3 in the information storage area 130.

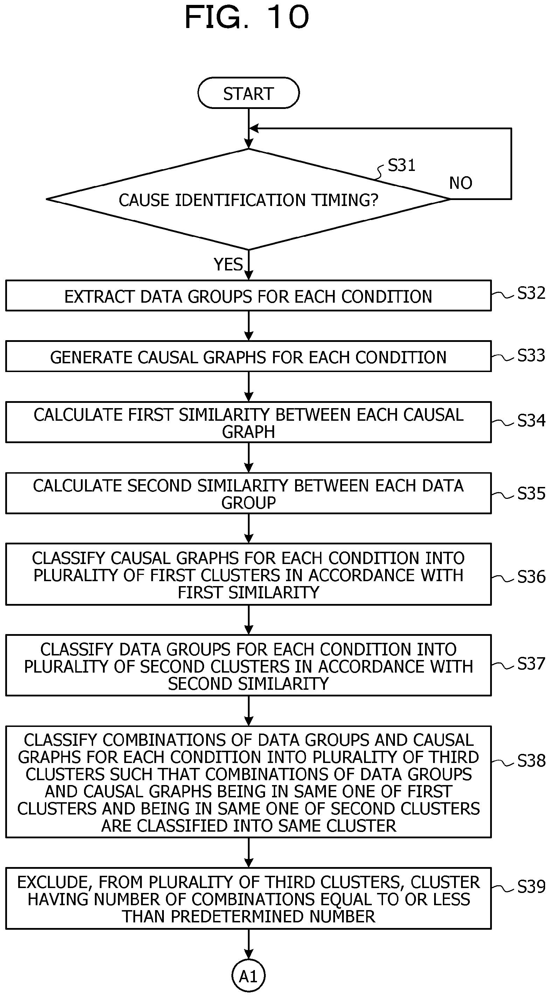

Thereafter, as illustrated in FIG. 10, the data extraction unit 112 waits until the cause identification timing comes, for example (NO in S31).

Then, in a case where the cause identification timing has come (YES in S31), the data extraction unit 112 refers to, for example, the object data group 131 stored in the information storage area 130 to extract, for each of a plurality of conditions, partial data groups 131 whose combinations of a plurality of features satisfy each condition (S32).

Specifically, as illustrated in FIG. 12, for example, the data extraction unit 112 separately extracts, from the object data group 131 regarding a plurality of students S, a partial data group 131a corresponding to students S corresponding to a condition A designated in advance, a partial data group 131b corresponding to students S corresponding to a condition B designated in advance, and a partial data group 131c corresponding to students S corresponding to a condition C designated in advance.

Subsequently, for example, the graph generation unit 113 generates, for each of the plurality of conditions, the causal graphs 132 indicating relationships between a plurality of features included in the partial data groups 131 corresponding to each condition (S33).

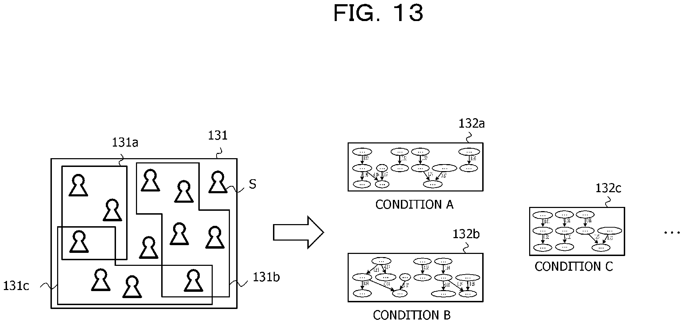

Specifically, as illustrated in FIG. 13, for example, the graph generation unit 113 separately generates a causal graph 132a indicating a relationship between a plurality of features included in the partial data group 131a, a causal graph 132b indicating a relationship between a plurality of features included in the partial data group 131b, and a causal graph 132c indicating a relationship between a plurality of features included in the partial data group 131c.

Note that, for example, the information processing apparatus 1 may perform the processes in S12 and S13 by using Wide Learning (registered trademark), which is a machine learning technique for generating a training model (white box type training model) that can explain the reason for the evaluation.

Next, for example, the first similarity calculation unit 114 calculates the first similarity information 133 between the causal graphs 132 for each of the plurality of conditions (S34).

Specifically, for example, the first similarity calculation unit 114 may calculate, as the first similarity information 133, a distance in an adjacent matrix regarding the causal graphs 132 generated in the process in S32, a distance of a causal effect with respect to the objective variable regarding the causal graphs 132 generated in the process in S32, or the like.

In addition, for example, the second similarity calculation unit 115 calculates the second similarity information 134 between the partial data groups 131 for each of the plurality of conditions (S35).

Specifically, for example, the second similarity calculation unit 115 may calculate, as the second similarity information 134, the Jaccard coefficient, the Dice coefficient, the Simpson coefficient, or the like regarding the partial data groups 131 extracted in the process in S31.

Then, for example, the clustering unit 116 classifies the causal graphs 132 for each of the plurality of conditions into a plurality of first clusters in accordance with the first similarity information 133 (S36).

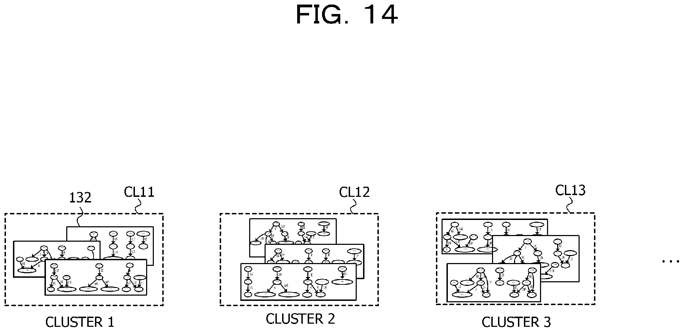

Specifically, as illustrated in FIG. 14, for example, the clustering unit 116 classifies the causal graphs 132 generated in the process in S33 into a plurality of first clusters including a cluster CL11, a cluster CL12, and a cluster CL13 such that the causal graphs 132 having higher first similarity information 133 calculated in the process in S34 are classified into the same first cluster.

In addition, for example, the clustering unit 116 classifies the partial data groups 131 for each of the plurality of conditions into a plurality of second clusters in accordance with the second similarity information 134 (S37).

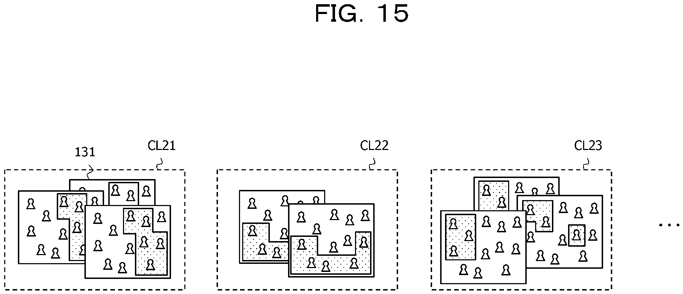

Specifically, as illustrated in FIG. 15, for example, the clustering unit 116 classifies the partial data groups 131 extracted in the process in S32 into a plurality of second clusters including a cluster CL21, a cluster CL22, and a cluster CL23 such that the partial data groups 131 having higher second similarity information 134 calculated in the process in S35 are classified into the same second cluster.

Thereafter, for example, the clustering unit 116 classifies combinations of the partial data groups 131 and the causal graphs 132 for each of the plurality of conditions into a plurality of third clusters such that a plurality of causal graphs 132 being in the same one of the first clusters obtained by classifying each of the causal graphs 132 and being in the same one of the second clusters obtained by classifying the partial data groups 131 corresponding to each of the causal graphs 132 are classified into the same cluster (S38).

In other words, in the process in S38, for example, the clustering unit 116 classifies combinations of the partial data groups 131 and the causal graphs 132 for each of the plurality of conditions into a plurality of third clusters so as to classify, into the same cluster, a plurality of partial data groups 131 being in the same one of the first clusters obtained by classifying the causal graphs 132 corresponding to each of the partial data groups 131 and being in the same one of the second clusters obtained by classifying each of the partial data groups 131.

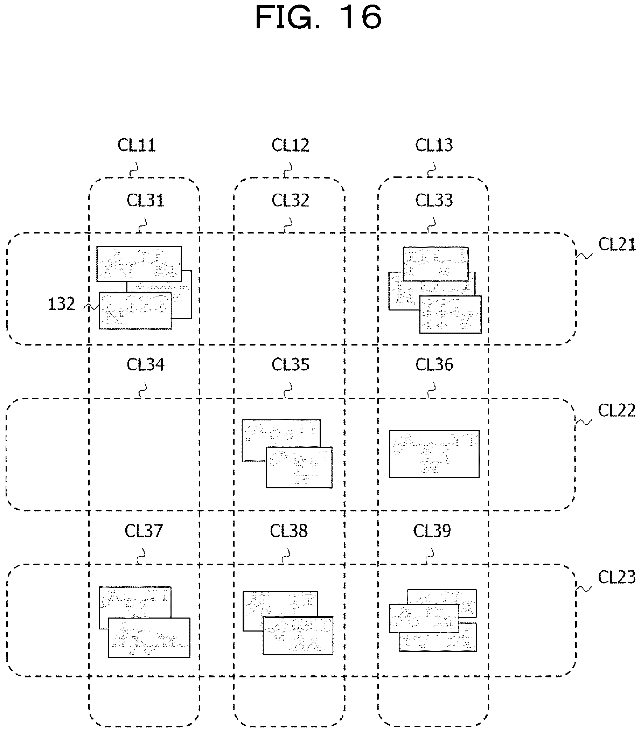

Specifically, as illustrated in FIG. 16, for example, the clustering unit 116 classifies the causal graph 132 corresponding to the partial data group 131 classified into the cluster CL21 in the process in S37 among the causal graphs 132 classified into the cluster CL11 in the process in S36 into a cluster CL31.

In addition, as illustrated in FIG. 16, for example, the clustering unit 116 classifies the causal graph 132 corresponding to the partial data group 131 classified into the cluster CL21 in the process in S37 among the causal graphs 132 classified into the cluster CL13 in the process in S36 into a cluster CL33.

Furthermore, as illustrated in FIG. 16, for example, the clustering unit 116 classifies the causal graph 132 corresponding to the partial data group 131 classified into the cluster CL22 in the process in S37 among the causal graphs 132 classified into the cluster CL12 in the process in S36 into a cluster CL35. Description of other information included in FIG. 16 will be omitted.

That is, the clustering unit 116 performs clustering regarding combinations of the partial data groups 131 and the causal graphs 132 in accordance with the similarity between each of the partial data groups 131 and the similarity between each of the causal graphs 132, thereby performing classification such that essentially close combinations are included in the same cluster.

This may allow the information processing apparatus 1 to aggregate a plurality of partial data groups 131 and a plurality of causal graphs 132 having essentially close causal relationships.

Then, for example, the clustering unit 116 excludes, from the plurality of third clusters, each cluster having a number of partial data groups 131 included in the cluster equal to or less than a predetermined number (S39). The predetermined number may be, for example, one.

That is, a combination not classified into a cluster including many combinations of the partial data groups 131 and the causal graphs 132 in the process in S38 can be determined as an outlier. Therefore, for example, the clustering unit 116 excludes a combination that can be determined to be an outlier (a cluster including only a combination that can be determined to be an outlier).

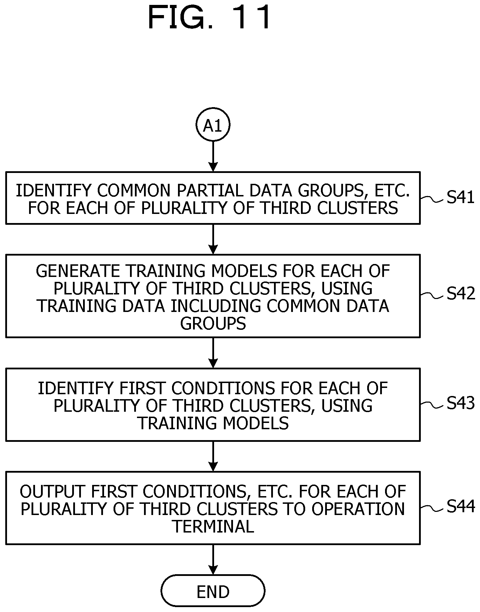

Subsequently, as illustrated in FIG. 11, for example, the condition identification unit 117 identifies, for each of the plurality of third clusters, common partial data groups 131d common to the partial data groups 131 included in each cluster (S41).

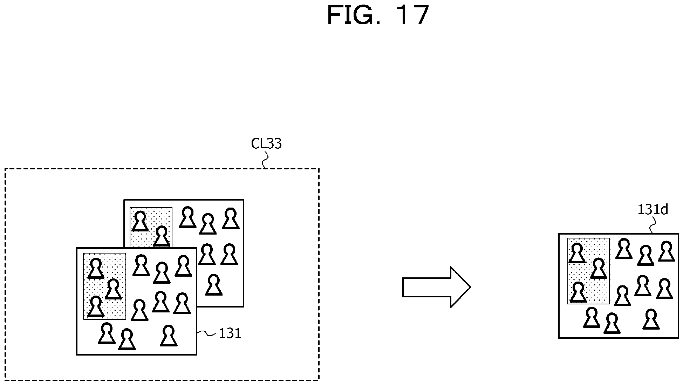

Specifically, as illustrated in FIG. 17, for example, the condition identification unit 117 identifies data included in a predetermined percentage or more (for example, 80 (%) or more) of the partial data groups 131 among data constituting a plurality of partial data groups 131 included in the cluster CL33, as the common partial data group 131d.

In addition, for example, the condition identification unit 117 generates, for each of the plurality of third clusters, common causal graphs 132d common to the causal graphs 132 included in each cluster (S41).

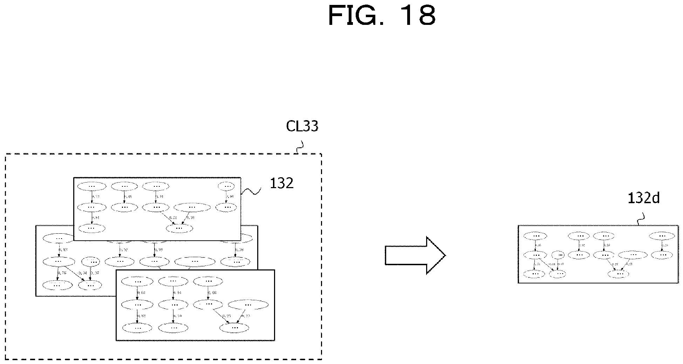

Specifically, as illustrated in FIG. 18, for example, the condition identification unit 117 generates a new causal graph 132 including a predetermined percentage or more (for example, 80 (%) or more) of edges among edges constituting the causal graphs 132 corresponding to the plurality of partial data groups 131 included in the cluster CL33, as the common causal graph 132d.

Thereafter, for example, the condition identification unit 117 generates, for each of the plurality of third clusters, training models by performing machine learning with the common partial data groups 131d classified into each cluster as positive examples and the common partial data groups 131d classified into the other clusters as negative examples (S42).

That is, for example, the condition identification unit 117 conducts, for each of the plurality of third clusters, training capable of classifying data groups classified into each cluster and data group classified into the other clusters.

Specifically, for example, by using Wide Learning (registered trademark), the condition identification unit 117 generates a training model capable of evaluating an object (data) with positive or negative, capable of explaining the reason for the evaluation, capable of comprehensively enumerating conditions constituted by all combinations of variables, and further capable of assigning importance to the enumerated conditions by using an approach such as logistic regression (hereinafter, also simply referred to as importance).

Then, for example, the condition identification unit 117 identifies, for each of the plurality of third clusters, conditions indicated by the training models corresponding to each cluster, as the first conditions (S43). Hereinafter, a specific example of the process in S43 will be described.

### [Specific Example of Process in S43]

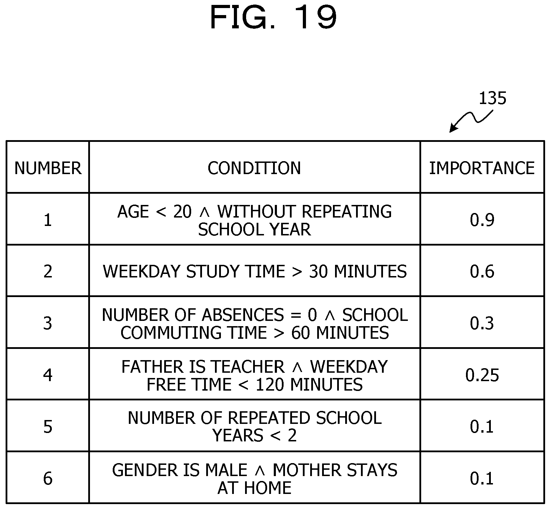

FIG. 19 is a diagram explaining a specific example of the process in S43. Specifically, FIG. 19 is a diagram explaining a specific example of the importance information 135 indicating the importance of each condition output from the training model generated in the process in S42.

The importance information 135 illustrated in FIG. 19 indicates that "importance" of the condition of "age < 20 Λ without repeating school year" is "0.9" and "importance" of the condition of "weekday study time > 30 minutes" is "0.6", for example. Description for other information included in FIG. 19 will be omitted.

Then, for example, in a case where "0.9" in the importance information 135 illustrated in FIG. 19 is the maximum value of "importance", the condition identification unit 117 identifies, for example, "age < 20 Λ without repeating school year" as the first condition.

Returning to FIG. 11, for example, the condition output unit 118 outputs the first conditions identified for each of the plurality of third clusters to the operation terminal 5 in association with the common causal graphs 132d (S44).

Specifically, in this case, for example, the condition output unit 118 may output an edge not included in the causal graph 132 corresponding to the entire object data group 131 (for example, the causal graph 132 generated in advance by the graph generation unit 113), among edges included in the common causal graphs 132d, in an emphasized state.

This allows the information processing apparatus 1 to output the important causal relationship identified by the cause identification process in an emphasized form, for example. Therefore, for example, the information processing apparatus 1 can output the important causal relationship identified by the cause identification process and the condition (first condition) of the partial data group 131 under which the identified causal relationship occurs in an associated form, for each of the plurality of third clusters.

As described above, the information processing apparatus 1 according to the present embodiment refers to, for example, the information storage area 130 that stores the object data group 131 constituted by combinations of a plurality of features to extract, for each of a plurality of conditions, partial data groups 131 whose combinations of the plurality of features satisfy each condition. Then, for example, for each of the plurality of conditions, the information processing apparatus 1 identifies the causal graphs 132 between the plurality of features included in the partial data groups 131 corresponding to each condition.

Subsequently, the information processing apparatus 1 classifies the causal graphs 132 for each of the plurality of conditions into a plurality of first clusters, for example, based on the first similarity between the causal graphs 132 for each of the plurality of conditions. In addition, the information processing apparatus 1 classifies the partial data groups 131 for each of the plurality of conditions into a plurality of second clusters, for example, based on the second similarity between the partial data groups 131 for each of the plurality of conditions.

Thereafter, for example, the information processing apparatus 1 classifies the partial data groups 131 for each of the plurality of conditions into a plurality of third clusters so as to classify, into the same cluster, a plurality of partial data groups 131 being in the same one of the first clusters obtained by classifying the relationships corresponding to each of the partial data groups 131 and being in the same one of the second clusters obtained by classifying each of the partial data groups 131.

Then, the information processing apparatus 1 identifies, for each of the plurality of third clusters, the first conditions capable of classifying the partial data groups 131 classified into each cluster and the partial data groups 131 classified into the other clusters and outputs the identified first conditions together with a classification result for the plurality of third clusters.

That is, for example, the information processing apparatus 1 according to the present embodiment classifies the partial data groups 131 extracted for each of the plurality of conditions into a plurality of third clusters such that, among the partial data groups 131 that can be determined to be essentially close to each other, the partial data groups 131 whose corresponding causal graphs 132 can also be determined to be essentially close to each other are included in the same cluster. Then, for example, the information processing apparatus 1 identifies the first condition that is a condition under which an important causal relationship leading to objective solution appears, for each of the plurality of third clusters.

This may allow the information processing apparatus 1 according to the present embodiment to aggregate combinations that can be determined to be essentially close to each other, even in a case where there are a large number of combinations of the partial data groups 131 and the causal graphs 132, for example, and to easily identify an important causal relationship leading to solving a problem.

In addition, for example, the information processing apparatus 1 according to the present embodiment outputs classification results and the first conditions corresponding to each cluster together, thereby enabling output in a form associating an important causal relationship identified by the cause identification process with the first condition under which the identified important causal relationship appears. Therefore, for example, by browsing each piece of information output by the information processing apparatus 1, the operator may be allowed to easily grasp the correspondence between the important causal relationship identified by the cause identification process and the first condition under which the identified important causal relationship appears.

Furthermore, for example, the information processing apparatus 1 according to the present embodiment classifies, into the same cluster, a plurality of data groups 131 corresponding to the causal graphs 132 that can be determined to be similar to each other, among the plurality of data groups 131 that can be determined to be similar to each other, thereby enabling to output information indicating whether or not the plurality of causal graphs 132 similar to each other are essentially close to each other, and information indicating whether or not the data groups 131 similar to each other are essentially close to each other. Therefore, for example, by browsing each piece of information output by the information processing apparatus 1, the operator may be allowed to easily determine whether or not the plurality of causal graphs 132 similar to each other are essentially close to each other and determine whether or not the data groups 131 similar to each other are essentially close to each other.

### REFERENCE SIGNS LIST

- 1: Information processing apparatus

- 5: Operation terminal
- 10: Information processing system
- NW: Network

## Claims

1. An information processing program for causing a computer to execute a process comprising:
referring to a storage unit that stores a plurality of pieces of data constituted by combinations of a plurality of features to extract, for each of a plurality of conditions, data groups of which the combinations satisfy each of the conditions;
identifying, for each of the plurality of conditions, relationships between the plurality of features included in the data groups that correspond to each of the conditions;
classifying the relationships for each of the plurality of conditions into a plurality of first clusters, based on first similarity between the relationships for each of the plurality of conditions;
classifying the data groups for each of the plurality of conditions into a plurality of second clusters, based on second similarity between the data groups for each of the plurality of conditions;
classifying the data groups for each of the plurality of conditions into a plurality of third clusters so as to classify, into a same cluster, a plurality of the data groups that are in a same one of the first clusters obtained by classifying the relationships that correspond to each of the data groups and are in a same one of the second clusters obtained by classifying each of the data groups;
identifying, for each of the plurality of third clusters, first conditions capable of classifying the data groups classified into each cluster and the data groups classified into other clusters; and
outputting the identified first conditions together with a classification result for the plurality of third clusters.

2. The information processing program
according to claim 1, wherein
the identifying the first conditions includes
identifying and outputting the first conditions for each cluster that has a predetermined number or more of the data groups classified into each cluster, among the plurality of third clusters.

3. The information processing program
according to claim 1, wherein
the identifying the first conditions includes:
identifying, for each of the plurality of third clusters, common data groups common to one or more of the data groups classified into each cluster; and
identifying, for each of the plurality of third clusters, the conditions capable of classifying the common data groups classified into each cluster and the common data groups classified into other clusters, as the first conditions.

4. The information processing program
according to claim 3, wherein
the identifying the first conditions includes:
generating, for each of the plurality of third clusters, training models by performing machine learning with the common data groups classified into each cluster as positive examples and the common data groups classified into other clusters as negative examples; and
identifying, for each of the plurality of third clusters, the conditions indicated by the training models that correspond to each cluster, as the first conditions.

5. The information processing program
according to claim 1, wherein
the identifying the first conditions includes
identifying, for each of the plurality of third clusters, common relationships common to one or more of the relationships that correspond to one or more of the data groups classified into each cluster, and
the outputting includes outputting information that indicates the common relationships, as the classification result for the plurality of third clusters.

6. The information processing program
according to claim 5, wherein
the outputting includes outputting information that indicates the relationships that are not included in the relationships between the plurality of features included in each piece of data stored in the storage unit, among the common relationships.

7. An information processing apparatus comprising:
a data extraction unit configured to, by referring to a storage unit that stores a plurality of pieces of data constituted by combinations of a plurality of features extract, for each of a plurality of conditions, data groups of which the combinations satisfy each of the conditions;
a relationship identification unit configure to identify, for each of the plurality of conditions, relationships between the plurality of features included in the data groups that correspond to each of the conditions;
a clustering unit configured to classify the relationships for each of the plurality of conditions into a plurality of first clusters, based on first similarity between the relationships for each of the plurality of conditions, classify the data groups for each of the plurality of conditions into a plurality of second clusters, based on second similarity between the data groups for each of the plurality of conditions and classify the data groups for each of the plurality of conditions into a plurality of third clusters so as to classify, into a same cluster, a plurality of the data groups that are in a same one of the first clusters obtained by classifying the relationships that correspond to each of the data groups and are in a same one of the second clusters obtained by classifying each of the data groups;
a condition identification unit to identify, for each of the plurality of third clusters, first conditions capable of classifying the data groups classified into each cluster and the data groups classified into other clusters; and
a condition output unit configured to output the identified first conditions together with a classification result for the plurality of third clusters.

8. The information processing program
according to claim 7, wherein
the relationship identification unit:
identifies, for each of the plurality of third clusters, common data groups common to one or more of the data groups classified into each cluster; and
identifies, for each of the plurality of third clusters, the conditions capable of classifying the common data groups classified into each cluster and the common data groups classified into other clusters, as the first conditions.

9. The information processing program
according to claim 8, wherein
the relationship identification unit:
generates, for each of the plurality of third clusters, training models by performing machine learning with the common data groups classified into each cluster as positive examples and the common data groups classified into other clusters as negative examples; and
identifies, for each of the plurality of third clusters, the conditions indicated by the training models that correspond to each cluster, as the first conditions.

10. An information processing method comprising:
referring to a storage unit that stores a plurality of pieces of data constituted by combinations of a plurality of features to extract, for each of a plurality of conditions, data groups of which the combinations satisfy each of the conditions;
identifying, for each of the plurality of conditions, relationships between the plurality of features included in the data groups that correspond to each of the conditions;
classifying the relationships for each of the plurality of conditions into a plurality of first clusters, based on first similarity between the relationships for each of the plurality of conditions;
classifying the data groups for each of the plurality of conditions into a plurality of second clusters, based on second similarity between the data groups for each of the plurality of conditions;
classifying the data groups for each of the plurality of conditions into a plurality of third clusters so as to classify, into a same cluster, a plurality of the data groups that are in a same one of the first clusters obtained by classifying the relationships that correspond to each of the data groups and are in a same one of the second clusters obtained by classifying each of the data groups;
identifying, for each of the plurality of third clusters, first conditions capable of classifying the data groups classified into each cluster and the data groups classified into other clusters; and
outputting the identified first conditions together with a classification result for the plurality of third clusters.

11. The information processing method
according to claim 10, wherein
the identifying the first conditions includes:
identifying, for each of the plurality of third clusters, common data groups common to one or more of the data groups classified into each cluster; and
identifying, for each of the plurality of third clusters, the conditions capable of classifying the common data groups classified into each cluster and the common data groups classified into other clusters, as the first conditions.

12. The information processing method
according to claim 11, wherein
the identifying the first conditions includes:
generating, for each of the plurality of third clusters, training models by performing machine learning with the common data groups classified into each cluster as positive examples and the common data groups classified into other clusters as negative examples; and
identifying, for each of the plurality of third clusters, the conditions indicated by the training models that correspond to each cluster, as the first conditions.
